# EUROPEAN PATENT APPLICATION

(11) **EP 4 006 750 A1**
(43) Date of publication of application: **01.06.2022**
(21) Application number: 20020569.8
(22) Date of filing: 27.11.2020
(51) Int. Cl.: G06F 17/18, G06T 11/20

(54) **GENERATING MACHINE READABLE MULTI-DIMENSIONAL PARAMETER SETS**

(71) Applicant: Prisma Analytics GmbH, 80331 München (DE)
(72) Inventor: Schloer, Hardy Frank, 80331 München (DE)
(74) Representative: Reich, Jochen

(57) **Abstract**

The present invention is directed towards a computer implemented method for extracting machine readable multi-dimensional parameter sets. The suggested method can rely on heavily heterogeneous data sources, which includes data representation in any type and format. The computer implemented method is able to detect superior information in such data sources and is able to transfer such data into a data format being specifically tailored to specific end devices. Hence, the resulting data can be efficiently processed by further devices and accordingly the suggested method is suitable for big data analysis. The invention is furthermore directed towards a respectively arranged system along with a computer program product and a computer-readable medium.

## Description

The present invention is directed towards a computer implemented method for extracting machine readable multi-dimensional parameter sets. The suggested method can rely on heavily heterogeneous data sources, which includes data representation in any type and format. The computer implemented method is able to detect superior information in such data sources and is able to transfer such data into a data format being specifically tailored to specific end devices. Hence, the resulting data can be efficiently processed by further devices and accordingly the suggested method is suitable for big data analysis. The invention is furthermore directed towards a respectively arranged system along with a computer program product and a computer-readable medium.

WO 2019/086638 A1 shows a method for building computing machinery out of multiple separate networked components, wherein the method of assigning addresses to individual network nodes is designed to make improbable, to any required degree of certainty, the possibility that one node in the network or subnetwork has the same address as another node in the network or subnetwork, and for communicating messages to and from such nodes with assigned addresses to other and possibly different nodes with possibly different addresses in said computer network. The multiple separate network nodes are capable of computing functions on the data sent to them, and of responding with the data resulting from said computations or transmitting such results to other nodes in the network. Collectively a system of such nodes implements a finite general purpose Turing machine.

WO 2020/079014 A1 shows representations of physical objects in text, stores them in a particular type of database, and allows simplified retrieval and abstraction of said physical objects. The simplified retrieval and abstraction facilitates the drawing of inferences regarding properties and behavior of a particular object from consideration of other properties and behaviors of that object and from references to that object and associations related to that object.

US 10,187,254 B2 shows methods, systems and products which predict emotional moods. Predicted moods may then be used to configure devices and machinery. A communications device may be configured to a mood of a user. A car may adjust to the mood of an operator. Even assembly lines may be configured, based on the mood of operators. Machinery and equipment may thus adopt performance and safety precautions that account for varying moods.

WO 2014/ 074426 A1 shows a method for predicting social sentiment of a plurality of persons.

The prior art shows several techniques for extracting information from text items and transfer such information into a visual representation. However, not every data model is suitable for any purpose and accordingly, there is a need for developing specific techniques of data extraction and data modeling. At least an alternative solution enhancing and completing existing solutions shall be provided.

Hence, the overall object is to provide a method and an apparatus that are able to deliver efficient outputs even for big data applications. Accordingly, it is also an object of the present invention to provide a system arrangement being designed in accordance with the suggested method. Moreover, it is an object of the present invention to provide a respectively arranged computer program product and a computer-readable medium.

The object is solved by the subject-matter according to claim 1.

Accordingly, a computer implemented method for extracting machine readable multi-dimensional parameter sets is suggested, comprising the steps of storing a set of named object entities and assigning respectively one vector of technical values to each of the object entities; reading out a heterogeneous data source over a distributed communication network and identifying the named object entities therein; calculating a count the occurrences of each of the named object entities in the heterogeneous data source and weighting the vector of technical values in accordance with the calculated count per object entity; arranging the weighted vector in a multidimensional data space; and addressing the arranged vector using a machine device for further processing and for initializing control commands.

In a preliminary step storing a set of named object entities is performed. This may be done such that a natural language vocabulary is selected and from such a language specific nouns are extracted. Such nouns or verbs or further types of language parameters may be defined as object entities representing a subset of the overall natural language. For doing so existing techniques may be applied and there are as well data sets that already contain such object entities.

However, once such object entities are identified they are assigned to a vector of technical values. There may be several sets of object entities and accordingly, for each subset of the natural language a vector is designed for each noun. Hence, each object entity holds a vector, the vector comprising several values. Such values may be for instance numeric values. The vector can be arranged in an n-dimensional data space, wherein n is the number of parameters or values being defined in the vector. Hence, in case the vector holds three values the instances of the vector can be arranged in a cube-like structure. While this is understood by the human brain the vector space may also be of a dimension being out of human understandable and perceivable space.

The identification of respective values may be accomplished using training data, which assigns each object entity several values according to a specific dimension. For instance, such a dimension may be 'helpful' and a further information may be 'informative'. Hence, an object entity may be classified with a value of 1 for informative and a value of 0.3 for helpful. This means that the respective object entity has been fully informative but only little helpful. In this way technical manuals can be structured and evaluated according to their purpose and further usage.

Further defining the above example an object entity may be a 'configuration file', which may be in a certain perspective be informative but not helpful. In case a user wants to install a computer system a configuration file may be informative but not helpful. As this is only an example the values may be defined according to any purpose. The perspective again may be reflected in the set of object entities. The object entities may be of a specific technical filed, while a further set of object entities may represent a field arising from chemistry. Hence, one single object entity may be informative in the technical field but none informative in the chemical field. This allows the present invention to implement several perspectives in different fields.

Once such a set of named object entities is stored and the respective vector is stored for each object entity a heterogeneous data source is read out. This can be accomplished using a distributed communication network such as the internet. Further networks may also be suitable such as a company-wide telecommunication infrastructure. The distributed network may also comprise wireless data communication. The heterogeneous data source may be used in its entireness or only parts thereof depending on the overall size of the data provided. For instance the heterogeneous data source may be read out in single information items. Such an information item may comprise a textual item, a picture, a sound, an image, a database, a configuration file or any combination thereof. Hence, any data source can be accessed according to the suggested method. The items may be provided such that for instance an article is analyzed, wherein the article comprises text and some pictures.

The named object entities are identified by an appropriate matching technique. This may for instance be natural language processing or pattern matching. In case an image is provided, for instance a photo, then objects are identified using pattern matching to be accomplished using predefined images of object entities. In this way the object entities, which were previously defined are identified in the heterogeneous data source.

Once such information is available the gathered information can be analyzed. During the analyzation process calculating an account of the occurrences for each of the named object entities in the heterogeneous data source is performed. Hence, it is identified how often the previously defined object entities are contained in the respective information item. Merely as an example the object entity 'server' may be comprised ten times in the information item and the object entity 'database' may be comprised fifteen times. While in general one might think that the object entity of the database is more important than the object entity server this only represents a perspective. The perspectives again are reflected in the vector and each dimension is assigned specific semantics. Hence, according to a first purpose a server might be more interesting than a database, while according to a further purpose it may be the other way round. Hence, the respective perspective is reflected in each dimension by a technical value.

Once the occurrences are counted there are weighted using their vector and the calculated count. This may be performed by multiplying the count with the respective vectors. As texts differ in their size or general data sources differ in their size it may be appropriate to normalize the outcome. Normalizing in this case means putting the count into relation with the overall data size. In case the evaluated data is large it comes by nature that there are more counts. This observation is put into context by a normalization algorithm. Hence, the calculated count may likewise be a relative count considering the size of the examined data.

After that the weighted vector is arranged in a multidimensional data space. This step might involve a graphical representation of the weighted vector such that for instance the technical values are arranged along a coordinate system. Depending on the number of dimensions this might involve a reduction of the number of dimensions. Several techniques can be applied for doing so, for instance three dimensions can be combined such that an RGB code results. Hence, the technical values present a parameter indicating Red, Green and Blue. For instance, in case six dimensions are present, the first three dimensions might indicate the RGB code and the next three dimensions might indicate a position in a three-dimensional coordinate system. Moreover, dimensions can be clustered such that several dimensions are combined towards one single dimension. For instance, a data point in a multidimensional space might be reduced to a single data point being the most representative data point.

A further contribution of the present invention is to arrange the information in the multidimensional space under indication of specific deviations from normal distributions. Hence, the suggested method might be performed several times and the weighted vectors are calculated. The arrangement of the weighted vector in the multidimensional data space may be accomplished such that only those values are considered that drastically change over time. Hence, in case one dimension stays the same or does not change over a predefined threshold it is not considered for data representation. In this way only the changing dimensions are considered and are presented for further consideration. This allows the modeling of a behavior over time.

Summarizing the above in case only two dimensions change over time they can be extracted and represented in the coordinate system. The same holds true for three dimensions, which can then be arranged in a three-dimensional cube indicating the dynamic behavior of object entities.

Moreover, clustering may be performed such that not only vectors of single object entities are considered but the invention also refers to clusters of several object entities. This opens the possibility that for instance an article is evaluated and consequently, a set of weighted vectors result. This provides the opportunity that not only single object entities are represented in the multidimensional space but also data items such as articles. In this way the heterogeneous data source is broken down into information items, which again contain several object entities.

Once the vector is arranged in the multidimensional data space it can be addressed by further devices and the representation can be used for processing the data and for initializing control commands. Initializing further control commands might include that the data is used as input for a further interface. This may be a graphical interface representing the data or that the data is used for further processing. The data may be used for input in a machine or robot such as a software agent. Initializing control commands might include that the weighted vector serves as input for a function or method. For instance, the weighted vector might be used for invocation of further instructions thereby handing over the vector.

According to an aspect of the present invention the heterogeneous data source is divided into sets of information items and the method is performed on at least a selection of the sets of information items. This provides the advantage that the heterogeneous data can be divided into predefined sets of object entities, such as those being provided by an article. An article might represent an information item, which holds several object entities. In this way the weighted vector of each object entity can be set into relation with a further vector. For instance, several vectors can be established for an information item. Hence, an article is evaluated comprising text and an image. The text holds several object entities and the image might hold several object entities. For each of the object entities a weighted vector is established and all those vectors together may be represented by a single weighted vector. For instance, the middle of all weighted vectors can be computed and hence, the center vector is used for further processing. Accordingly, not the vector of a single object entity is arranged in the multidimensional data space but rather a vector representing the complete article.

According to a further aspect of the present invention identifying the named object entities comprises at least one technique of natural language processing, stemming, computational learning, artificial intelligence, operating a neuronal network, pattern matching, voice recognition, image processing and/ or data analysis. This provides the advantage that any information provided by the heterogeneous data source can be used for data harvesting. For instance, voice recognition may be applied and the resulting text may be analyzed using natural language processing. The provided data can be analyzed by computational learning involving predefined training data sets. Moreover, image processing can be used such that previously defined images are matched to identify object entities.

According to a further aspect of the present invention arranging the weighted vector comprises using a database, an interface, a legacy set of instructions, a graphical output, a coordinate system, a representation device and/ or clustering of weighted vectors generated in several iterations of the method and arranging only one representative vector. This provides the advantage that several techniques can be applied and graphical arrangements can be computed as well as clustering can be performed. For instance, several weighted vectors can be clustered and represented by one prominent single vector. Hence, not only several object entities can be arranged but also a specific information item such as an article. An article may generally be referred to as a specific web page or a section thereof.

According to a further aspect of the present invention the multidimensional data space is mapped to a two- or three-dimensional space. This provides the advantage that in case a graphical output is chosen this can be accomplished so that it is easily understood by a human observer. Further techniques may be involved such as dimension reduction.

According to a further aspect of the present invention the weighted vector is arranged in a spherical or round-shaped data space using at least one of a radius, theta 0 and/ or a circumference. This provides the advantage that a comprehensive representation technique is used, where the user may dynamically interact with the data representation and graphically browse through the provided representation. For instance, in case a round-shaped data space is provided the arrangement of the object entity being represented by the weighted vector can be arranged such that a radius is provided indicating the distance to the middle of the circle, an angle may be provided and/ or a measurement indicating the involved circumference. Hence, any point of the shape can be addressed.

According to a further aspect of the present invention different sections in the multidimensional data space are defined to which different sets of rules are applied when processing and initializing control commands is performed. This provides the advantage that special regions of interest can be handled differently as they are of more importance. Moreover, different aspects may be defined and the resulting data is further classified according to the section within the multidimensional space.

According to a further aspect of the present invention the vector comprises at least three technical values which are mapped to a color code. This provides the advantage that three technical values may for instance refer to the RGB code. Hence, the color indicates the semantics of the object entities. Further dimensions can be considered and can be used for arranging the object entity represented by the vector in the multidimensional space.

According to a further aspect of the present invention the method is accomplished at least twice and the resulting weighted vectors are compared. This provides the advantage that the data representations can be evaluated such that a deviation is identified and hence, dynamics of the underlying system are identified. In general, accomplishing the method several times considers that the underlying heterogeneous data base evolves over time and hence, each iteration has typically different results. Accordingly, in case the method is accomplished twice the heterogeneous data source provides different information regarding the first and the second iteration. Hence, a deviation can be identified and presented to the user.

According to a further aspect of the present invention the method is accomplished time delayed at least twice and at least one further vector is extrapolated. This provides the advantage that dynamics can be identified in the heterogeneous data source and hence, the observation can be used to predict further dynamics in the future. For instance in case three dimensions change continuously it can be suggested that these three dimensions continue their change and accordingly a future weighted vector can be calculated. Hence, the underlying system allows the prediction of future facts and information.

According to a further aspect of the present invention selecting one set of named object entities out of several sets of named object entities is performed. This provides the advantage that object entities can be evaluated differently and accordingly, the technical values are adapted accordingly. In case a server is of a certain interest according to a first perspective the same notion, namely server, may be not of interest according to a second perspective. Hence, several perspectives or fields of interests can be modeled thereby creating different sets of named object entities. Hence, it is possible, to identify several fields of interest and the data evaluation is accomplished accordingly.

According to a further aspect of the present invention normalizing the weighted vector of technical values over the size of the heterogeneous data source is performed. This provides the advantage that the number of occurrences is set into relation regarding the over-all size of the heterogeneous data source. In case single information items of the data source are evaluated, such as a website, the number of general objects is used and set into relation with the identified named object entities. In this case the problem is addressed that a longer website always contains more occurrences of a specific notion compared to a short website.

The object is also solved by a system arrangement for extracting machine readable multi-dimensional parameter sets, comprising a data storage device arranged to store a set of named object entities and assign respectively one vector of technical values to each of the object entities; a communication interface arranged to read out a heterogeneous data source over a distributed communication network and identify the named object entities therein; a computation device arranged to calculate a count the occurrences of each of the named object entities in the heterogeneous data source and weight the vector of technical values in accordance with the calculated count per object entity; a further computation device arranged to arrange the weighted vector in a multidimensional data space; and a machine device arranged to address the arranged vector, the machine device being arranged to further process and initialize control commands.

The object is also solved by a computer program product comprising instructions to cause the arrangement to execute the steps of the method as well by a computer-readable medium having stored thereon the computer program.

It is of special advantage that the method as suggested above can be executed using structural features of the suggested device and control unit. Accordingly the method teaches steps which are arranged to operate the suggested device. Furthermore, the device comprises structural features allowing the accomplishment of the suggested method. In addition a computer program and a computer program product respectively is suggested comprising instruction which perform the suggested method when executed on a computer or the device according to the present invention. Furthermore, the instructions provide means for implementing the structural features of the claimed device. Accordingly an operable image of the structural features of the device can be created. Likewise an arrangement comprising the structural device features is provided.

Wherever, structural features are provided they can likewise be established virtually thereby creating a virtual instance of physical structures. For instance a device can likewise be emulated. It may be the case that single sub steps are known in the art but the overall procedure still delivers a contribution in its entireness.

Further advantages, features and details of the invention emerge from the following description, in which aspects of the invention are described in detail with reference to the drawings. The features mentioned in the claims and in the description can each be essential to the invention individually or in any combination. The features mentioned above and those detailed here can also be used individually or collectively in any combination. Functionally similar or identical parts or components are in some cases provided with the same reference symbols. The terms "left", "right", "top" and "bottom" used in the description of the exemplary aspects relate to the drawings in an orientation with normally legible figure designation or normally legible reference symbols. The aspects shown and described are not to be understood as conclusive, but are exemplary for explaining the invention. The detailed description is provided for the information of the person skilled in the art; therefore, in the description, known circuits, structures and methods are not shown or explained in detail in order not to complicate the understanding of the present description. The invention will now be described merely by way of illustration with reference to the accompanying figures, which show:
Figure 1: a flowchart of a computer implemented method for extracting machine readable multi-dimensional parameter sets according to an aspect of the present invention;
Figure 2: a general procedure used by the computer implemented method for extracting machine readable multi-dimensional parameter sets according to an aspect of the present invention;
Figure 3: a two dimensional data space with parameters further describing the graphical representation space according to an aspect of the present invention; and
Figure 4: a further example of a two dimensional data space with parameters further describing the graphical representation space according to an aspect of the present invention.

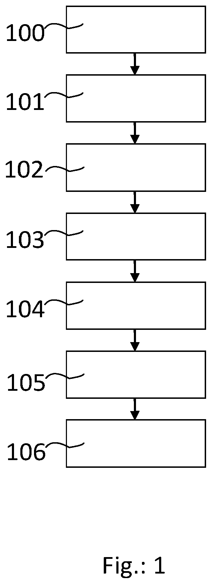

Figure 1 shows a computer implemented method for extracting machine readable multi-dimensional parameter sets, comprising the steps of storing 100 a set of named object entities and assigning respectively one vector of technical values to each of the object entities; reading out 101 a heterogeneous data source over a distributed communication network and identifying 102 the named object entities therein; calculating 103 a count the occurrences of each of the named object entities in the heterogeneous data source and weighting 104 the vector of technical values in accordance with the calculated count per object entity; arranging 105 the weighted 104 vector in a multidimensional data space; and addressing 106 the arranged vector using a machine device for further processing and for initializing control commands.

The user is able to select a time interval indicating from which to which date the heterogeneous data source is to be considered. Typically documents or information items in general have a time stamp and hence the data basis can be restricted using these intervals.

The person skilled in the art will appreciate that individual method steps can be carried out iteratively and/ or in a different order.

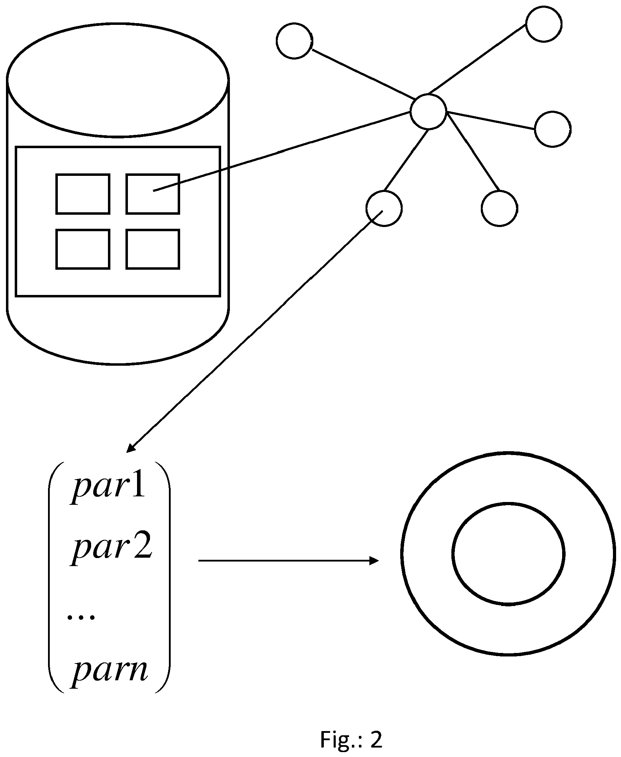

Figure 2 shows two dimensional data space which may be used for representing the resulting data items. In this sphere objects, events, properties and the like can be arranged according to their semantic meaning. A physical object, in our definition, is a material thing, real or perceived through abstract understanding. A physical object is an abstract or material object, other than what is determined to be a "Person". A Person is a category distinct from physical objects, although sharing many of the same qualities. In the present invention the method detects physical objects in text data, through corpus linguistics and text mining techniques. The method utilizes existing techniques of Part of Speech ("PoS") tagging as well as Word Category Disambiguation ("WCD"). PoS is a set of text processing methods through which words and phrases are tagged is being parts of speech, based on the syntactic context of the words in question. Methods of PoS are well known to experts in the field of computational linguistics and are not claimed as novel per se.

The challenge with physical object recognition, in this sense, from arbitrary textual material is that it also requires Word Sense Disambiguation ("WSD") and Named Entity Disambiguation (NED), in addition to WCD. Thus, the method used in the present invention combines PoS, WSD and NED.

The approach of the present invention is based on the observation that physical objects are expressed in natural language text through nouns. In linguistic PoS analysis, nouns are words used to refer to persons, places, or things. Common nouns are nouns that are not the name of any particular person, place, or things. That is, common nouns usually refer to categories or types of objects, rather than a particular specified object. It is commonplace in linguistics to refer to singular common nouns as NN and plural common nouns as NNS. Proper nouns, in contrast, refer to specific, individual items.

The top left-hand side in Fig. 2 shows a heterogeneous data source comprising several articles being represented by respectively one rectangle each. Within this information item, namely an article or website, several object entities are contained as indicated on the top right-hand side. These object entities are in mutual relation, wherein a causality can be identified between the object entities. Each object entity has a corresponding vector being indicated in the bottom left-hand side of Fig. 2. Likewise, the vector may refer to all object entities and accordingly represent the information item, for instance the website. The weighted vector is then arranged in a multidimensional data space, for instance a circle as indicated in the present figure.

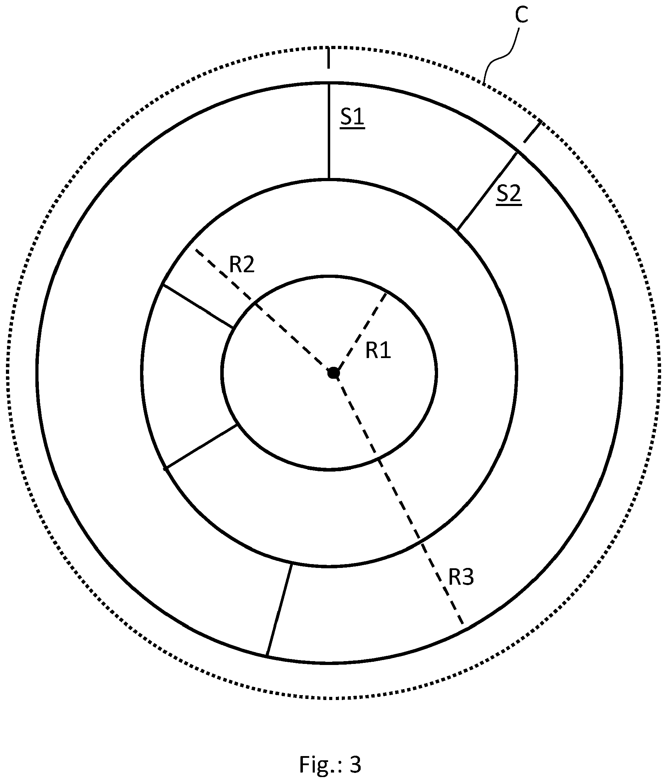

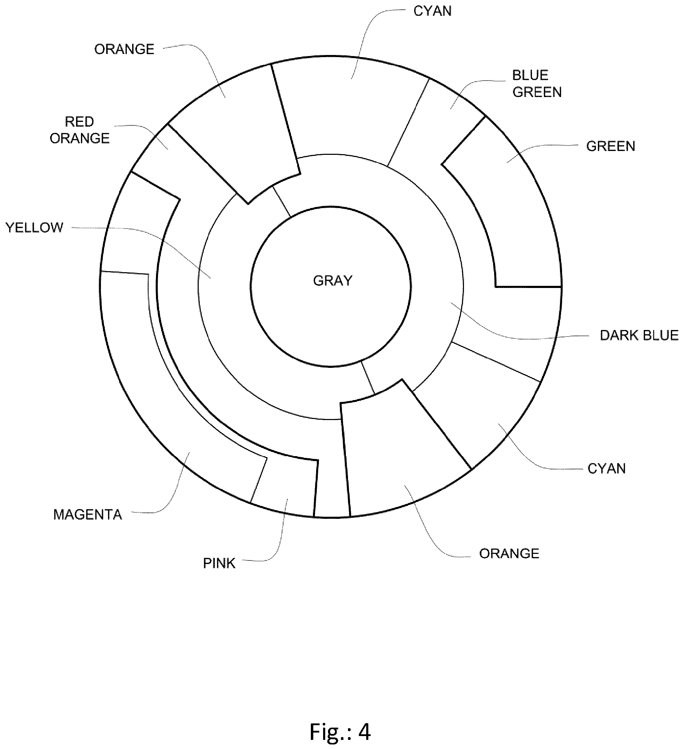

Fig. 3 shows a two-dimensional data space and indicates how the data can be arranged within the data space. For instance, measurements can be used such as the radius or a specific angle, which is not shown in the present figure. Moreover, a circumference C may be used for arranging data sets. In this way sections can be created such as section S1 or S2. Moreover, different sections can be addressed by a specific radius, such as radius R1, R2, or R3. The provided measurements are merely examples and are only for demonstration purposes. They are not to be understood as limiting restrictions. Wherever exemplary colors are introduced such passages refer to figure 4.

There exists no other scientific model built and perfected that is capable of observing, analyzing, and visualizing technical energies in a way that comprehensively combines a grounded theoretical base, empirical information, and a complex methodology than the one being currently suggested. The model is one of the contributions the present invention creates. Technical science has contributed in a variety of ways throughout its history developing policies or decision-making systems - by proposing genius and critical theories that shed some light on how the world works, by developing rigorous quantitative methods that organize our knowledge, and by acknowledging the diverse empirical data that are available to scientists. However, it is an observation that, while each perspective is in itself valuable, they diverge and produce limited and fragmented results. This application describes the technical solution to this problem, the Technical Energy Diagram - a composite tool for observing and understanding technical moods that makes the best out of the intersection of these three perspectives on knowledge creation and management.

The Technical Energy Diagram illustrates the trends of collective moods on a circumplex, combining sectional measures with longitudinal measures displayed in a panel format. This data processing, visualization, and analysis tool displays polar data combined with trigonometric functions on a geometric space, thus allowing for more than two measurements on the same observation at a single point in time. Observations from our own extensive research introduce these additional points as principles that have guided the development of the Technical Energy Diagram and will further guide the interpretations on the plotted data:
Understanding the collective state of the mind of a society relative to a particular issue is the basis to understanding its behavior, both in the present and in the future.
- The collective mind of society makes very little difference between the situation people desire for the future, the situation they are faced with, or the situation they believe they are in presently. Therefore, hereinafter the invention names all of these the active states of a society - the "issues that are on people's minds" or the collective state of a society.
- When one reads the collective state of a society, one gets a strong indication of what reality society is currently transforming into. Reading the collective state of mind of a society is like reading a leading indicator with a positive probability to reveal our collective future.
- Every issue must be evaluated separately to assemble and understand the combined big picture. Most analyzed issues will produce a contradictory output. It is, therefore, important to understand the quantitative distributions of the qualitative elements within a society to understand the energy and direction in which it is moving.

Using radii, theta, and a circumference, the diagram is a geometric space on which data about collective moods, affects, and emotions is plotted, thus creating a dynamic and complex image of the way an object is perceived by collectives and to what intensity. Fourteen energy layers positioned in the geometric space observe collective affects and emotions at various degrees of valence and arousal.

A glossary-based approach in content analysis is fundamentally a technique for counting terms. The empirical data - various types of discourses in text format - is first observed word by word. Once a glossary entry is identified in the empirical data during this observation, it is extracted and counted. The Technical Energy Diagram functions in the same way. Our machines run our Technical Energy Glossary and any adjacent Specialized Glossaries against our empirical data, identifying, counting, and extracting glossary entries. These entries are then plotted on the geometrical space. As the frequency of a glossary word plotted on the circumplex increases across empirical observations - or, in other words, as data is input in the algorithm - the diameter of the data point on the diagram increases.

The Technical Energy is not only aligned with valuable standardized glossaries, such as the Linguistic Inquiry and Word Count Dictionary or the Regressive Imagery Dictionary, but it is also built according to cutting-edge computational social scientific principles that make human-machine interaction exciting and inspiring. In addition to the generalized Technical Energy Glossary, the invention has also built extension packs of specialized glossaries to observe and measure the dynamics of specific fields of interest. These extension packs are built in both a deductive approach, using expert sources of specialized vocabulary and an inductive approach: specialized vocabulary extracted empirically from the natural language in news articles and scientific sources classified by topic.

The suggested diagram is like a telescope. However, it does not look at the stars, it looks inwards, searching for the mass, gravity fields, and black holes of the collective minds of human society. These appear as circular fields of varying sizes on the graph plotting area, representing the amount of energy they carry. Depending on where they appear on the plotting area, they energize and fuel different sentiments and behaviors in society. It is important to understand that the distributions across the collective moods observed by the diagram set a very specific direction in how society thinks about various issues and how it will react to them in the future. Societies change all the time; therefore, one must measure multiple energies often. The present invention completes this frequent measurement by using the Technical Energy Diagram as a dynamic tool that captures short-term, mid-term, and long-term event memories. Not only does our telescope look at queries precisely defined by our users, it also extracts the dynamics of technical energies on a weekly basis. As a result, whenever there is interest, the diagram shows us how moods change across time, from one week to another, occasionally with stunning game changes.

The Technical Energy Diagram harvests the complexity and simplicity of collective information by looking at the composition of the states of feeling and behavior. It captures the fine dynamic of action and reaction in technical energies by inquiring about atomistic elements that build technical and societal fabric: abstract concepts, time references, persons, events, physical objects, groups and organizations, science and technology, and geography. One can call this the C+8 technology and the invention uses it to study causality phenomena in our sustained, highly qualified, and successful effort to understand the rhetoric of our times. The user can select time intervals and any or all of the C+8 atomic elements that need to be observed on the geometric space of the diagram.

As the data points populate the Technical Energy Diagram, collective trends and patterns of feeling and behavior can be observed. The circular distribution of the variables of technical mood invites the user to read and interpret human behavior and sentiment as flowing between different directions and levels of arousal, as previously described. As such, the circle displays collective content in an Active Environment on the left hemisphere and a Reactive Environment on the right hemisphere. The data that appears on the Active Environment reflects behavior that revolves mostly around action rather than discussion - intensity, heat, and incitement representing just some of its characteristics. The Reactive Environment exemplifies behavior that is generally considered cooler, defined more through debate and discussion and less by action. Furthermore, these states of feeling and behavior have various degrees of intensity which are captured and illustrated by the radius of the diagram. Level 0 in the center, measured on the 0-2.5 radius, shows a low interest in reality, where people live in their own world and do not care much about external reality, unless it has a direct and immediate impact on themselves. The mid-range level, on the 2.5-4 radius, indicates a normal sense of reality. People and collectives live in a balance between their own mental space and the external influence of life. The outermost level, on the 4-7 radius, is where an extremely strong sense of reality and participation in life affairs exists. This describes an intensely participatory culture in both the Active and Reactive environments.

The Technical Energy Diagram in the application displays an Energy Layers legend, called Segment Breakdown, where each layer, identified by color and label, is assigned the frequency count of glossary word occurrences that are plotted on the circumplex. This gives an initial insight into which energy is most intense for a particular query in the application. More refined statistical calculations bring detail and nuance to word frequencies. Percentages and means per layer, circular variance and standard deviation, variance and standard deviation of radius, and mean resultant length are used to indicate which layer of the Technical Energy Diagram is most and least intense in terms of technical moods. It is our objective to use such measurements to observe change across time, computing the statistical data of the diagram in time series and probability models. The versatility of the energy layers based on the Active/Reactive Environment distinction allows us to create custom Technical Energy Diagrams, based on the needs of our customers. Currently, the implemented application integrates several models of the Technical Energy Diagram.

In the following an example of the suggested data representation is provided. However, the names of the section and the respective colors are merely for illustration purposes and not meant to be understand in a limiting way. Of course, the exemplary colors and names can be replaces by any technical terminology and color. The names such as "escalation" are merely for demonstration purposes which also holds true for the colors such as "orange".

The Active Environment is the intense, hot, incited side, where the expected behavior is more action, less talk. Here, one observes how Frustration and Motivation are the underlying collective moods. Power and Fear - the Orange Zone - on both sides of the Red Zone are a kind of feeding zone, where technical mood trends feed Escalation, a realm between power, action, and fear. These two orange surfaces also feed each other through polarization and calls to action. The Red Zone is the escalation zone, containing the most punishing, energetic, expected, and uncontrollable tendencies nurtured by the current state of power and fear on its sides. On top of it, the Pink Zone indicates strong decisiveness and supports violence as a solution. This is when and where aggression transforms into direct violence. Further on, at the top of these three zones one finds the Magenta Zone, where crisis, war, and major catastrophes are on the brink or in full progress.

The Reactive Environment is the 'cool' side, where behavior is set by Hope, Anxiety, and Debate, but much less by action. The Blue Zone technical mood on top of the Dark Blue and Navy Zones hopes for and expects an uneventful status quo. It is characterized by technical inertia and low energy in how technical change occurs. In its upper sector this zone illustrates that people seek ideas and ideals. In its lower sector, the Blue Zone shows a life filled with negative expectations, technical action is almost frozen. The next layer, the Green Zone, is where people debate and innovate. The Dark Green Zone is where people find consensus and come up with constructive solutions, where they are driven by hope. The middle of the circumplex, the Grey Zone, is where apathetic collective moods converge. In a more applied reading, Power - Inaction - Fear form an ideological axis. To its left, Frustration, Motivation, Escalation, Action, and Conflict accumulate their energies in a HOT ACTION trend that, obviously, indicates propensity towards intense action. To the right of the ideological axis, Anxiety, Hope, Ideals, Negative Expectations, Debate, and Agreement accumulate energy in what can be called COOL ACTION. This energy indicates that people seek ideas and discuss possible solutions to technical issues. The Active Environment is the area committed to heat, pressure, and force. Decisions and actions made in order to crush rivals, avoid financial downfall, initiate hostile takeovers, and so, on are located here. On the other side there is the Reactive Environment that is defined by greater calm and positivity. We find new ideas, higher goals, and positive expectations in this area. The Orange Zone shares both Environments, since Strategic Push and Fear of Failure can have both heat and calm. This zone feeds all the others on the circumplex and is equally balanced through its polarization on opposite sides of the wheel.

The Dark Yellow Zone indicates the beginnings of result pressure, not strong enough to really make anything happen, but causing enough disturbance to make its presence felt. The Yellow Zone shows initiative. The zones with increasing heat levels are Red, Pink, and Purple, respectively, positioned on top of each other. The Red Zone indicates commitment, where future actions and decisions are pushed forward by the Orange Zone on both its sides. The Pink Zone - tough action - is determined by the Red Zone and is characterized by harsh actions that lead to success or failure. Conflict is imminent in the Pink Zone, escalating until it reaches the Purple Zone that contains open attacks and activities against various entities.

The Dark Blue and Navy Zones are the base for all the other zones on the Reactive Environment. The first step to confidence, value definition, and innovation is defining expectations, while to apprehension is hesitation. This zone contains almost no action and identifies more with thought and speech. Next are the Blue, Green, and Dark Green zones. Policies and future goals are determined here. The Blue Zone is both innovative and apprehensive, and is affected by the Orange Zone. The Green Zone is more focused on defining value and making progress, a step higher than the Blue Zone but not as high as the Dark Green Zone, where one finds confidence. Level 0 (grey) indicates equilibrium, the status quo is maintained here with no issues that upset balance. In a more applied reading, Strategic push - Equilibrium - Fear of Failure form a Vision axis. To its left, Result Pressure, Initiative, Commitment, Tough Action, and Attack Competition accumulate their energies in an EXECUTION trend that indicates action to be taken on the market or against competition. To the right of the Vision axis, Defining Expectation, Hesitation, Apprehension, Innovation, Defining Value, and Confidence accumulate energy in what can be called STRATEGY, which indicates strategic planning and development to be in tune with the market.

All tabs described previously mine the data that our system parses and stores in real time. Text to circumplex is a spin-off of these tabs, fit for users who want to explore their own unstructured, natural language text. Currently, the tool is usable with text in English. The Technical Energy Layers are similar to those in the Technical and Political Momentum tool, as Text to circumplex explores the affective dimension of the full text that the user inserts in the text field on the left side of the screen. The automatically generated descriptive statistics follow the same structure that the disclosure has already illustrated in the previous sections.

The massive quantities of information that people currently produce about themselves, about others, about things, relations, and interactions that shape the world are part of a socio-technical phenomenon that is equally complex and simple. It is complex in its diversity of colors, languages, nuances, timings, technologies; it is simple in its patterns, trends, and rules of organization around nuclei of energy. The contextualization of the reality atoms in the C+8 model on the Technical Energy Diagram is an exclusive, high premium source of knowledge about the current and potential dynamics of the world. We provide insight into collective initiatives of polarized action and into reactions and responses to such initiatives. We provide an elaborate guide to interpret these behaviors and the associated feelings that arise from our crowd data. The Technical Energy Diagram is an excellent, cutting edge digital tool that offers contextual qualitative insight into the stories that frame economic and political events, while also allowing the user to draw their own conclusions about the universe. The diagram is equally directed and undirected - it provides expert guidelines as to what the data means, while at the same time encouraging a personal interpretation and explanation of behaviors.

In general a circumplex can likewise be refered to as circular diagram.

## Claims

1. A computer implemented method for extracting machine readable multi-dimensional parameter sets, comprising:
- storing (100) a set of named object entities and assigning respectively one vector of technical values to each of the object entities;
- reading out (101) a heterogeneous data source over a distributed communication network and identifying (102) the named object entities therein;
- calculating (103) a count of the occurrences of each of the named object entities in the heterogeneous data source and weighting (104) the vector of technical values in accordance with the calculated count per object entity;
- arranging (105) the weighted (104) vector in a multidimensional data space;and
- addressing (106) the arranged vector using a machine device for further processing and for initializing control commands.

2. The method according to claim 1, **characterized in that** the heterogeneous data source is divided into sets of information items and the method is performed on at least a selection of the sets of information items.

3. The method according to claim 1 or 2, **characterized in that** identifying (102) the named object entities comprises at least one technique of natural language processing, stemming, computational learning, artificial intelligence, operating a neuronal network, pattern matching, voice recognition, image processing and/ or data analysis.

4. The method according to any one of the preceding claims, **characterized in that** arranging (105) the weighted (104) vector comprises using a database, an interface, a legacy set of instructions, a graphical output, a coordinate system, a representation device and/ or clustering of weighted (104) vectors generated in several iterations of the method and arranging only one representative vector.

5. The method according to any one of the preceding claims, **characterized in that** the multidimensional data space is mapped to a two or three dimensional space.

6. The method according to any one of the preceding claims, **characterized in that** the weighted vector is arranged (105) in a spherical or round shaped dataspace using at least one of a radius, theta and/ or circumference.

7. The method according to any one of the preceding claims, **characterized in that** different sections in the multidimensional data space are defined to which different sets of rules are applied when processing and initializing control commands is performed.

8. The method according to any one of the preceding claims, **characterized in that** the vector comprises at least three technical values which are mapped to a color code.

9. The method according to any one of the preceding claims, **characterized in that** the method is accomplished at least twice and the resulting weighted vectors are compared.

10. The method according to any one of the preceding claims, **characterized in that** the method is accomplished time-delayed at least twice and at least one further vector is extrapolated.

11. The method according to any one of the preceding claims, **characterized in that** selecting one set of named object entities out of several sets of named object entities is performed.

12. The method according to any one of the preceding claims, **characterized in that** normalizing the weighted vector of technical values over the size if the heterogeneous data source is performed.

13. System arrangement for extracting machine readable multi-dimensional parameter sets, comprising:
- a data storage device arranged to store (100) a set of named object entities and assign respectively one vector of technical values to each of the object entities;
- a communication interface arranged to read out (101) a heterogeneous data source over a distributed communication network and identify (102) the named object entities therein;
- a computation device arranged to calculate (103) a count of the occurrences of each of the named object entities in the heterogeneous data source and weight (104) the vector of technical values in accordance with the calculated count per object entity;
- a further computation device arranged to arrange (105) the weighted (104) vector in a multidimensional data space; and
- a machine device arranged to address (106) the arranged vector, the machine device being arranged to further process and initialize control commands.

14. A computer program product comprising instructions to cause the arrangement of claim 13 to execute the steps of the method of any one of claims 1 to 12.

15. A computer-readable medium having stored thereon the computer program of claim 14.
